# EUROPÄISCHE PATENTSCHRIFT

(11) **EP 2 477 842 B1**
(45) Veröffentlichungstag und Bekanntmachung des Hinweises auf die Patenterteilung: **04.09.2013**
(21) Anmeldenummer: 10760250.0
(22) Anmeldetag: 14.09.2010
(51) Int. Cl.: B60N 2/48

(54) **KOPFSTÜTZE UND FAHRZEUGSITZ**
HEADREST AND VEHICLE SEAT
APPUI-TÊTE ET SIÈGE DE VÉHICULE

(30) Priorität: 16.09.2009 DE 102009041429; 30.11.2009 DE 102009056090; 02.09.2010 DE 102010044248
(43) Veröffentlichungstag der Anmeldung: 25.07.2012
(73) Patentinhaber: Johnson Controls GmbH, 51399 Burscheid (DE)
(72) Erfinder: DILLINGER, Thomas, 40880 Ratingen (DE)
(74) Vertreter: Wolff, Felix
(86) Internationale Anmeldenummer: PCT/EP2010/005619
(87) Internationale Veröffentlichungsnummer: WO 2011/032678

(56) Entgegenhaltungen:
- DE-A1-102008 011 325
- DE-U1- 29 820 236
- DE-U1-202008 009 670
- US-A1- 2002 043 858
- US-A1- 2009 108 645

## Beschreibung

Die Erfindung betrifft eine mit einem Fluidsystem ausgestattete Kopfstütze und einen damit versehenen Fahrzeugsitz.

Es ist beispielsweise aus der US-A-2002/0043858, der DE-A-2020080096700, der DE-A-298202360, der US-A-2009/0108645 und der DE-A-102008011325 bekannt. Kopfstützen insgesamt oder Teile derselben in Fahrtrichtung (-X-Richtung des Fahrzeugs) oder gegen die Fahrtrichtung (X-Richtung des Fahrzeugs) zu verstellen, um eine hinsichtlich Komfort und Sicherheit optimale Position des Kopfstützenpolsters relativ zum Kopf des Insassen einzustellen. Es ist ferner aus der Offenlegungsschrift DE 39 00 495 Al bekannt, das vordere Polsterteil einer Kopfstütze bei einem voraussehbaren Unfall durch einen Fluidantrieb in -X-Richtung in eine Sicherheitsstellung zu verlagern.

Der Erfindung liegt die Aufgabe zugrunde, eine komfortabel und einfach in oder gegen die Fahrtrichtung einsteilbare Kopfstütze bereitzustellen und beim Aufprall des Kopfes des Sitzinsassen gegen ungewollte Verstellung zu sichern. Durch ein gutes Energiemanagement soll insbesondere die Gefahr eines Schleudertraumas (Whiplash) verringert werden.

Gelöst wird die Aufgabe mit einer Kopfstütze gemäß Patentanspruch 1

Die vorliegende Erfindung betrifft eine Kopfstütze, bei der die Kopfanlagefläche zu Komfort- und/oder Sicherheitszwecken zum Kopf des Sitzinsassen hin und davon weg bewegbar ist. Dabei kann die Kopfstütze insgesamt oder nur ein Teil von ihr bewegt werden. Diese Bewegung wird vorzugsweise von einem Fluidsystem beispielsweise einem Hydraulik- oder Pneumatiksystem mit einer Kolbenstange angetrieben. Die Verstellung der Kopfanlagefläche kann aber auch von Hand erfolgen, indem beispielsweise daran gezogen oder darauf gedrückt wird. Im Gegensatz zum Stand der Technik wird das Fluidsystem nicht dazu eingesetzt, in einer Unfallsituation die Kopfanlagefläche ruckartig in Richtung des Kopfes des Sitzinsassen zu verbringen. Das Fluidsystem bewirkt nur eine vergleichsweise langsame Verstellung der Kopfanlagefläche, die der Fahrzeuginsasse vornimmt, damit die Kopfstütze die für ihn optimale Stellung in Bezug auf Komfort und/oder Sicherheit einnimmt und/oder es fixiert die Kopfanlagefläche in einer Unfallsituation.

Die erfindungsgemäße Kopfstütze ist an einem erfindungsgemäßen Fahrzeugsitz insbesondere an dessen Rückenlehne angeordnet. Vorzugsweise ist eine derartige Kopfstütze höhenverstellbar und gegebenenfalls auch winkelverstellbar vorgesehen, um an die Körpergröße des jeweiligen Sitzinsassen angepasst werden zu können.

Der erfindungsgemäße Fahrzeugsitz kann einer oder mehreren Personen Platz bieten. Bei dem erfindungsgemäßen Fahrzeugsitz kann es sich folglich auch um eine Sitzbank handeln.

Erfindungsgemäß ist nun vorgesehen, dass das Fluidsystem vorzugsweise die Komfortverstellung der Kopfanlagefläche bewirkt, d. h. das mittels des Fluidsystems die Kopfanlagefläche automatisch in Richtung des Sitzinsassen und davon weg bewegt werden kann, um dessen Komfort und/oder Sicherheit zu erhöhen und/oder es fixiert die Kopfanlagefläche in einer Unfallsituation. Im Gegensatz zum Stand der Technik wird das Fluidsystem also nicht dazu eingesetzt, in einer Unfallsituation die Kopfanlagefläche ruckartig in Richtung des Kopfes des Sitzinsassen zu verbringen.

Weiterhin erfindungsgemäß weist das Fluidsystem der erfindungsgemäßen Kopfstütze ein Mittel auf, das die Kolbenstange bei einer Unfallsituation in ihrer jeweiligen Position fixiert. Fixiert im Sinne der Erfindung bedeutet, dass sich die Kopfanlagefläche bei einem Unfall nur so geringfügig bewegt, dass die Gefahr eines Schleudertraumas zumindest reduziert, vorzugsweise ausgeschlossen ist. Das Mittel sorgt für eine hohe Steifigkeit des Fluidsystems. Die erfindungsgemäße Kopfstütze hat folglich den Vorteil, dass für die zumindest weitgehende Fixierung der Kopfanlagefläche neben dem Fluidsystem kein weiteres System benötigt wird.

Vorzugsweist weist das Fluidsystem ein erstes und ein zweites Fluidreservoir auf, wobei bei der Komfortverstellung der Kopfanlagefläche ein Fluid von dem ersten in das zweite Fluidreservoir strömt.

Weiterhin bevorzugt weist das Fluidsystem ein Mittel auf, das bei einer Unfallsituation den Fluidaustauscht zwischen dem ersten- und dem zweiten Fluidreservoir zumindest reduziert, insbesondere unterbindet. Für den Fall, dass lediglich eine Reduktion des Fluidaustauschs vorgesehen ist, muss dieser so gering sein, dass sich die Kopfanlagefläche nur so minimal bewegt, dass die Gefahr eines Schleudertraumas nicht gegeben ist.

Erfindungsgemäß ist das Mittel ein Spalt zwischen dem Kolben und der Zylinderwand des Fluidsystems. Dieser Spalt verbindet das erste und das zweite Fluidreservoir Zur Komfortverstellung wird dieser Spalt von dem Fluid durchströmt. Für den Fall, dass jedoch auf den Kolben eine ruckartige Belastung, wie sie beispielsweise bei einem Unfall auftritt, ausgeübt wird, ist dieser Spalt so eng gestaltet, dass nur, wenn überhaupt, ein sehr geringer Fluidaustausch zwischen dem ersten und dem zweiten Reservoir stattfindet, so dass das Fluidsystem insgesamt sehr steif ausgebildet ist.

Gemäß einer nicht beauspruchten und nicht zur Erfindung gehorenden Ausführungsform ist das Mittel eine flexible Scheibe, die mit der Kolbenstange verbunden ist. Diese flexible Scheibe ist in dem Zylinder des Fluidsystems angeordnet. Zwischen der flexiblen Scheibe und der Zylinderwand besteht ein Spalt, der das erste und das zweite Fluidreservoir miteinander verbindet. In einer Unfallsituation wird die flexible Scheibe nun derartig deformiert, dass sich dieser Spalt zumindest teilweise schließt, so dass kein oder nur ein sehr geringer Fluidaustausch zwischen den beiden Reservoirs stattfindet. Dadurch kann sich die Kolbenstange nicht in den Zylinder hinein oder aus diesem heraus bewegen und das Fluidsystem ist insgesamt sehr steif.

Vorzugsweise weist die Scheibe einen kegelförmigen Querschnitt auf, wobei besonders bevorzugt die Kolbenstange in der Spitze des Kegels vorgesehen ist.

Gemäß einer weiteren nicht beauspruchten und nicht zur Erfindung gehörenden Ausführungsform ist das Mittel ein Ventil, das sich in einer Unfallsituation selbsttätig schließt. Vorzugsweise handelt es sich bei dem Ventil um eine Scheibe, die in einer Unfallsituation vorhandene Öffnungen, durch die ein Fluidaustausch zwischen dem ersten und dem zweiten Reservoir stattfinden kann, schließt. Vorzugsweise dreht sich die Scheibe in einer Unfallsituation und verschließt dadurch vorhandene Strömungskanäle.

Im folgenden wird die Erfindung anhand der Figuren 1 - 4 erläutert. Diese Erläuterungen sind lediglich beispielhaft und schränken den allgemeinen Erfindungsgedanken nicht ein.

Es zeigen:
- Fig. 1: eine erfindungsgemäße Kopfstütze in einer ersten Gebrauchsstellung (Fig, 1 a) und einer zweiten Gebrauchsstellung (Fig, 1b))
- Fig. 2: ein erstes erfindungsgemäßes Fluidsystem;
- Fig. 3: ein zweites erfindungsgemäßes Fluidsystem in Verstellposition (Fig. 3a) und in Sperrstellung (Fig. 3b);
- Fig. 4: ein drittes nicht beauspruchtes und nicht zur Erfindung gehörendes Fluidsystem in Verstellposition (Fig. 4a) und in Sperrstellung (Fig. 4b);

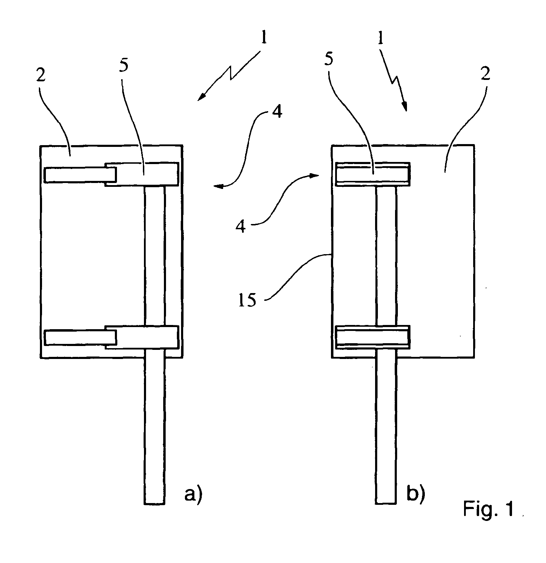

Die in Figur. 1 gezeigte Kopfstütze 1 besteht aus einem Polsterteil 2 und an der Rückenlehne befestigten Haltestangen 3, die mittels eines Fluidsystems 4 in Form eines Fluidantriebs 5 wirkverbunden sind. Im Ausführungsbeispiel ist eine Einstellung einer hinteren Gebrauchsstellung (Fig. 1 b), einer vorderen Gebrauchsstellung (Fig. 1a) sowie beliebiger dazwischen liegender Gebrauchsstellungen vorgesehen, wobei das Polsterteil 2 relativ zu den Haltestangen 3 verlagert wird. Grundsätzlich wäre auch eine Verstellung der Kopfstütze 1 insgesamt relativ zu der Rückenlehne oder auch eine Verstellung eines vorderen Polstersegments relativ zu einem hinteren Polsterelement vorstellbar. Der Fachmann erkennt , dass insbesondere die Kopfanlagefläche 15 der Kopfstütze zum Kopf des Sitzinsassen hin und davon weg bewegbar sein muss.

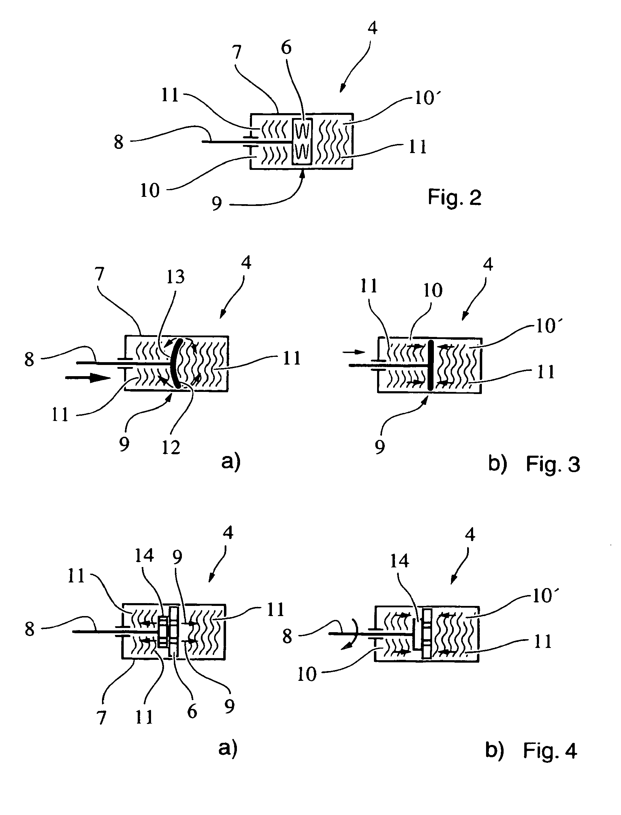

Das Fluidsystem 4 nach Figur 2 besteht aus einem mit den Haltestangen 3 verbundenen Zylinder 7 und einem Kolben 6, dessen Kolbenstange 8 auf das Polsterteil 2 bzw. die Kopfanlagefläche 15 wirkt. Der Raum im Zylinder 7 ist beiderseits des Kolbens 6 mit einem Fluid 11 gefüllt, welches durch einen engen Fluidpfad 9 zwischen den betreffenden Fluidreservoirs 10, 10' des Zylinder 7 fließen kann. Aufgrund der Viskosität ist dieser Fluss nur langsam möglich, so dass eine Komfort- und/oder Sicherheitsverstellung manuell durch den Benutzer erfolgen kann. Bei einer schlagartigen Belastung, beispielsweise dem Auftreffen des Kopfes auf das Polsterteil 2, verhält sich dieses System als Fluiddämpfer relativ steif und ermöglicht durch Festlegung der Viskosität und/oder des Fließquerschnitts ein gut beeinflußbares Energiemanagement. Das Fluidsystem 4 kann durch Einspeisen oder Ablassen von Fluid 11 in die oder aus den Kammern 10, 10' und der damit verbundenen Verschiebung des Kolbens 6 relativ zum Zylinder 7 gleichzeitig als Fluidantrieb 5 dienen. Der Antrieb kann jedoch auch anders erfolgen, beispielsweise durch einen mit dem Fluidsystem 4 in Reihe geschalteten elektrischen Antrieb, der beispielweise auf die Kolbenstange 8 direkt oder indirekt einwirkt.

Figur 3 zeigt eine weitere Ausführungsform der erfindungsgemäßen Kopfstütze, wobei auf die Ausführungen zu den Figuren 1 und 2 Bezug genommen wird. Bei der Ausbildung nach Figur 3 ist der Kolben 6 in Form einer stumpf kegelförmigen, elastischen Scheibe 12 ausgebildet, deren Mantelfläche gegenüber dem Zylinder 7 zur Ausbildung eines Fluidpfads 9 beabstandet ist. Der Raum im Zylinder 7 ist beiderseits der Scheibe 12 mit einem Fluid 11 gefüllt, welches durch einen engen Fluidpfad 9 zwischen den betreffenden Fluidreservoirs 10, 10' des Zylinders 6 fließen kann. Aufgrund der Viskosität ist dieser Fluss nur langsam möglich, so dass eine Komfort- und/oder Sicherheitsverstellung manuell durch den Benutzer erfolgen kann. Die Spitze 13 der kegelförmigen elastischen Scheibe weist entgegen der erwarteten Schlagbelastung, d.h. in Richtung des Kopfes des Sitzinsassen. Tritt diese auf, wird die Scheibe 12 verflacht, wodurch sich ihr Durchmesser vergrößert und durch Reduzieren/Sperren des Fluidpfads 9 und/oder Reibwirkung einer Verschiebung des Kolbens 6 relativ zum Zylinder 7 entgegenwirkt. Das Fluidsystem 4 kann durch Einspeisen oder Ablassen von Fluid 11 in die oder aus den Kammern 10, 10' und der damit verbundenen Verschiebung der Scheibe 12 relativ zum Zylinder 7 gleichzeitig als Fluidantrieb 5 dienen. Der Antrieb kann jedoch auch anders erfolgen, beispielsweise durch einen mit dem Fluidsystem 4 in Reihe geschalteten elektrischen Antrieb, der beispielweise auf die Kolbenstange 8 direkt oder indirekt einwirkt.

Figur 4 zeigt eine weitere Ausführungsform der erfindungsgemäßen Kopfstütze, wobei auf die Ausführungen zu den Figuren 1 und 2 Bezug genommen wird. Das Fluidsystem 4 nach Figur 4 weist einen mit Bohrungen 13 versehenen Kolben 6 auf, wobei die Kolbenstange 8 mit einer gleichfalls mit Bohrungen 13' versehenen, koaxial angeordneten Scheibe 14 ausgestattet ist. Eine langsame Verschiebung des Kolbens 6 relativ zum Zylinder 7 ist mit relativ geringem Kraftaufwand möglich, solange die Bohrungen 13, 13' zur Ausbildung von Fluidpfaden 10 in Überdeckung stehen. Dabei strömt das Fluid 11 durch die Bohrungen 13, 13'. Bei einer Schlaglast wird die Scheibe 14 jedoch um seine Symmetrieachse, beispielsweise so verdreht, dass die Bohrungen 13, 13' nicht mehr fluchten und der Fluidpfad 9 unterbrochen oder im Querschnitt reduziert ist. Die Drehung kann beispielsweise von der Kolbenstange 8 auf die Scheibe 14 übertragen werden, wobei die Kolbenstange 8 ihrerseits über eine diese Drehung bei Last erzeugende Getriebeeinrichtung mit dem Polsterteil 2 bzw. der Kopfanlagefläche 15 wirkverbunden ist. Das Sperren kann aber auch zum Beispiel manuell erfolgen. Die Scheibe 14 fungiert hier als Ventil. Das Fluidsystem 4 kann durch Einspeisen oder Ablassen von Fluid 11 in die oder aus den Kammern 10, 10' und der damit verbundenen Verschiebung des Kolbens 6 relativ zum Zylinder 7 gleichzeitig als Fluidantrieb 5 dienen. Der Antrieb kann jedoch auch anders erfolgen, beispielsweise durch einen mit dem Fluidsystem 4 in Reihe geschalteten elektrischen Antrieb, der beispielweise auf die Kolbenstange 8 direkt oder indirekt einwirkt.

### Bezugszeichenliste:

- 1: Kopfstütze
- 2: Polsterteil
- 3: Haltestange
- 4: Fluidsystem
- 5: Fluidantrieb
- 6: Kolben
- 7: Zylinder, Zylinderwand
- 8: Kolbenstange
- 9: Fluidpfad
- 10, 10': Fluidreservoir, Kammer
- 11: Fluid
- 12: Scheibe
- 13, 13': Ausnehmung, Bohrung
- 14: Ventil, Scheibe
- 15: Kopfanlagefläche

## Patentansprüche

1. Kopfstütze (1) mit einer zum Kopf des Sitzinsassen hin- und davon weg bewegbaren Kopfanlagefläche (15), die mit einem Fluidsystem (4) mit einer Kolbenstange (8) verbunden ist, wobei das Fluidsystem (4) vorzugsweise die Komfort- und/oder Sicherheitsverstellung der Kopfanlagefläche (15) bewirkt und dass es ein Mittel (9, 12, 14) aufweist, das die Kolbenstange in einer Unfallsituation in ihrer jeweiligen Position fixiert, **dadurch gekennzeichnet, dass** das Mittel (9, 12, 14) ein Spalt (9) zwischen einem Kolben (6) und einer Zylinderwand (7) ist.

2. Kopfstütze (1) nach Anspruch 1, **dadurch gekennzeichnet, dass** das Fluidsystem (4) ein erstes und ein zweites Fluidreservoir (10, 10') aufweist, wobei bei der Komfortverstellung der Kopfanlagefläche (15) ein Fluid (11) von dem ersten in das zweite Fluidreservoir strömt.

3. Kopfstütze (1) nach Anspruch 2, **dadurch gekennzeichnet, dass** das Fluidsystem ein Mittel (9, 12, 14) aufweist, das bei einer Unfallsituation den Fluidaustausch zwischen dem ersten und dem zweiten Fluidreservoir (10, 10') zumindest reduziert.

4. Fahrzeugsitz aufweisend eine Kopfstütze gemäß einem der voranstehenden Ansprüche.

## Claims

1. Head restraint (1) with a head contact surface (15) which is movable toward and away from the seat occupant's head and is connected to a fluid system (4) with a piston rod (8), wherein the fluid system (4) preferably adjusts the comfort and/or safety of the head contact surface (15), and said fluid system has a means (9, 12, 14) which fixes the piston rod in the particular position thereof in an accident situation, **characterized in that** the means (9, 12, 14) is a gap (9) between a piston (6) and a cylinder wall (7).

2. Head restraint (1) according to Claim 1, **characterized in that** the fluid system (4) has a first and a second fluid reservoir (10, 10'), a fluid (11) flowing from the first into the second fluid reservoir during the adjustment of the comfort of the head contact surface (15).

3. Head restraint (1) according to Claim 2, **characterized in that** the fluid system has a means (9, 12, 14) which, in the event of an accident situation, at least reduces the fluid exchange between the first and the second fluid reservoir (10, 10').

4. Vehicle seat having a head restraint according to one of the preceding claims.

## Revendications

1. Appui-tête (1) comprenant une surface d'appui pour la tête (15) pouvant être déplacée vers et depuis la tête d'un occupant du siège, laquelle surface d'appui pour la tête est connectée par un système fluidique (4) à une tige de piston (8), le système fluidique (4) causant de préférence le déplacement en vue du confort et/ou de la sécurité de la surface d'appui pour la tête (15) et présentant un moyen (9, 12, 14) qui fixe la tige de piston dans sa position respective dans le cas d'une situation d'accident, **caractérisé en ce que** le moyen (9, 12, 14) est une fente (9) entre un piston (9) et une paroi du cylindre (7).

2. Appui-tête (1) selon la revendication 1, **caractérisé en ce que** le système fluidique (4) présente un premier et un deuxième réservoir de fluide (10, 10'), un fluide (11) s'écoulant depuis le premier dans le deuxième réservoir dans le cas du déplacement en vue du confort de la surface d'appui pour la tête (15).

3. Appui-tête (1) selon la revendication 2, **caractérisé en ce que** le système fluidique présente un moyen (9, 12, 14) qui., dans le cas d'une situation d'accident, réduit au moins l'échange de fluide entre le premier et le deuxième réservoir de fluide (10, 10').

4. Siège de véhicule présentant un appui-tête selon l'une quelconque des revendications précédentes.
